# EUROPEAN PATENT APPLICATION

(11) **EP 2 071 005 A1**
(43) Date of publication of application: **17.06.2009**
(21) Application number: 07122116.2
(22) Date of filing: 03.12.2007
(51) Int. Cl.: C10G 1/04, C10B 53/02, C10B 53/00, C10G 1/08, C10G 1/00

(54) **Process for the selective de-oxygenation of biomass**

(71) Applicant: BIOeCON International Holding N.V., Curaçao (AN)
(72) Inventor: O'connor, Paul, 3871 KM HOEVELAKEN (NL)
(74) Representative: Rasser, Jacobus Cornelis

(57) **Abstract**

A reactive distillation process is disclosed for the selective oxygenation of a biomass. The biomass may be a ligno-cellulosic biomass, or a bio-oil.

The process comprises the steps of contacting a biomass slurry with a particulate inorganic material, and heating the mixture to its boiling point. In a preferred embodiment water vapors emanated from the process are collected and condensed to provide a source of fresh water.

## Description

### BACKGROUND OF THE INVENTION

### 1. Field of the Invention

The invention relates generally to the selective de-oxygenation of biomass. More particularly the invention relates to a process that can be carried out at a relatively low temperature and produces fresh water as a valuable by-product.

### 2. Description of the Related Art

There is an interest in processing biomass streams in traditional oil refineries, either alone or in admixture with crude-oil based feed stocks. However, biomass feed stocks generally contain high levels of oxygen, often in the range of 40 to 50 wt%. This is much higher than the oxygen content of crude oil based hydrocarbons, which is usually less than 1 wt%. The target oxygen content for burning and transportation fuels is less than 10 wt%.

PCT/EP 2007/058468 discloses a process for reducing the oxygen content of triglycerides by hydro-de-oxygenation. The process requires large amounts of hydrogen.

PCT/EP 2007/054375 discloses a process for reducing the oxygen content of a biomass whereby the biomass is catalytically converted in the presence of a decarboxylation catalyst. The oxygen reduction is generally insufficient to provide a feedstock that can be processed in an oil refinery. Moreover, the water content of the bio-oil obtained by this process tends to be too high.

WO 06/037368 A1 discloses a process for reducing the organic acid content of hydrocarbon streams using an alkaline catalyst at temperatures in the range of 200 to 500 °C. EP 1 719 811 A1 describes a similar catalytic process for producing liquid hydrocarbons from biomass, operating at 250 to 400 °C. At the temperatures of these processes bio-oils tend to rapidly degrade to gaseous products and char or viscous tar.

Thus, there is a particular need for a process for de-oxygenating biomass or bio-oil that operates at temperatures below 250 °C. There is a further need for a process that does not require an expensive separation step for removing water from the reaction product. Ideally, water is recovered in a form that allows its use in agriculture or for human consumption.

BRIEF SUMMARY OF THE INVENTION

The present invention addresses these problems by providing a reactive distillation process for the selective de-oxygenation of a biomass, said process comprising the steps of:
a) providing a slurry comprising the biomass and water;
b) contacting the biomass with a particulate inorganic material;
c) heating the slurry to its boiling point.

Another aspect of the invention comprises a method for capturing water vapors produced in step c) and converting the vapors to fresh water by condensation. Heat recovered during the condensation step may be recycled into the process. The fresh water produced in the process may be used in agriculture or for human consumption.

### DESCRIPTION OF ILLUSTRATIVE EMBODIMENTS

The following is a description of certain embodiments of the invention, given by way of example only.

Biomass is an attractive source of energy because its energy content is based on a plant's ability to convert CO₂ from the atmosphere to sugars and other carbohydrates under the influence of sunlight. Accordingly, the main energy carriers in biomass are carbohydrates (sugars, starch, cellulose, lignin), which contain large amounts of oxygen. In addition, biomass generally contains significant amounts of water.

The process of the present invention simultaneously removes oxygen and water from biomass. The bio-mass may be a ligno-cellulosic biomass, such as wood chips, straw, bagasse, corn husks, switch grass, agricultural waste, and the like. Suitable as the biomass feedstock of the present invention are also bio-oils. The term bio-oil is used to describe the liquid product obtained from ligno-cellulosic biomass in processes such as pyrolysis, thermochemical treatment, hydrothermal treatment, and the like.
The term "slurry" as used herein describes a biomass material comprising at least 10 wt% water. It will be understood that the definition includes materials that are solid, as well as materials that contain enough water to be semi-liquid or liquid. The term also includes water-containing bio-oils.

If the biomass is a bio-oil, the step of contacting the biomass with the particulate inorganic material may be a simple mixing step. If the biomass is a ligno-cellulosic biomass, the step of contacting the biomass with the particulate inorganic material preferably comprises exerting mechanical energy on the biomass in the presence of the particulate inorganic material so as to provide a more intimate mixing of the biomass and the particulate inorganic material. Examples of such mechanical action include kneading, milling, crushing, extruding, chopping, and combinations thereof..

In some cases it may be desirable to subject the ligno-cellulosic biomass to a particle size reduction step, such as chopping. It will be appreciated that this particle size reduction step may be combined with the step of contacting the aquatic biomass with a particulate inorganic material, as described in more detail herein below.

In general, the mechanical action, in addition to providing a more intimate contact between the aquatic biomass and the particulate inorganic material, also reduces the particle size of the aquatic biomass and crushes the cells of the aquatic biomass. Both effects are desirable, as they aid in the subsequent conversion of the biomass to bio-oil.

The particulate inorganic material may be inert, or it may have catalytic properties. For the purpose of the present invention, sand particles (SiO₂) are considered inert. Particulate inorganic material is considered having catalytic properties if it increases the rate of conversion of aquatic biomass to bio-oil under typical conversion conditions (e.g., 100 °C at atmospheric pressure) as compared to sand particles. It will be understood that "sand" obtained form a natural source may contain materials other than SiO₂, such as iron oxide (Fe₂O₃), which may give it catalytic properties.

Preferred for use herein are particulate inorganic materials having catalytic properties. Examples include clay, layered metal hydroxy-oxides, zeolites, aluminas, silica-aluminas, hydrotalcite and hydrotalcite-like materials, and the like.
Inexpensive waste products from other processes may be used, such as spent grit from sandblasting processes, spent catalysts from petrochemical processes, and the like.

Particularly preferred are alkaline materials, in particular alkaline materials comprising Al, Mg, Ca, or a combination thereof. In order to increase the alkalinity of the slurry a soluble alkaline material may be added. Preferred are alkaline materials comprising Na or K, in particular KOH, K₂CO₃, NaOH, Na₂CO₃, or Na₂O.

After contacting the slurry with the particulate inorganic material the slurry is heated to its boiling point. In general a temperature of less than 250 °C is sufficient, temperatures of less than 200 °C being preferred. Corresponding steam pressures are 39.7 bar and 15.5 bar, respectively. Alternatively the process may be carried out at atmospheric or sub-atmospheric pressure, and temperatures of about 100 °C or below 100 °C, respectively.

It will be appreciated that salt water, such as sea water, may be present in the slurry. As will be explained below, fresh water is produced via evaporation and condensation of water from the slurry. The use of sea water therefore does not impair the fresh water production of the present invention. The use of sea water may be preferred for reasons of availability.

In a preferred embodiment, water vapors emanating from the boiling slurry are collected and condensed to fresh water. This step is advantageously carried out in a distillation column. The distillation column may contain a packing material, preferably a catalytic packing material. During condensation the water vapors release significant quantities of energy in the form of heat. This heat may be used in the process, for example for pre-heating the slurry of step c).

Fresh water obtained in the process is sufficient purity to be used in agriculture, for example irrigation, without further purification. The fresh water may also be used in for human household use, such as washing and cleaning. It may even be used for human consumption, although in certain cases additional purification may be required, such as when volatile bio-oil components become included in the water as a result of a steam distillation process.

In addition to a water vapor stream, the process produces a light gas stream, a gaseous bio-oil stream, and a tar-like slurry. The term "gaseous bio-oil" refers to a bio-oil that is liquid at ambient temperature, but in the vapor phase under the conditions of step c). In case the feed stock is a ligno-cellulosic biomass, step c) also produces a liquid bio-oil stream. In general the liquid bio-oil is mixed with the tar-like slurry. The process may comprise the additional step of separating the liquid bio-oil from the tar-like slurry. This may be accomplished by settlement and phase separation.

The bio-oil may be used as-is as a heating fuel, or may be further processed in a refining process to produce liquid fuels suitable for internal combustion engines.

The tar-like slurry comprises tar, unconverted aquatic biomass, the inorganic particulate material, and salt. The tar-like slurry may be burned to produce heat and ash. The heat may be used in the reactive distillation process. The ash may be added to the slurry of steps b) or c). If desired, salt may be removed from the ash by spraying with water and draining the brine from the ash.

The process may comprise an additional step d) of stripping CO₂ from the reaction product of step c). CO₂ stripping may be done with steam. In a specific embodiment the steam used in the stripping step is superheated steam, which contributes to the heating of the slurry.

A reducing gas may be added during step c). CO is an example of a suitable reducing gas.

Desirably, the process of the present invention is integrated with an FCC (fluid catalytic cracking) process or a biomass catalytic cracking (BCC) process. The particulate inorganic material may be selected from the group consisting of spent FCC catalyst; regenerated FCC catalyst, spent BCC catalyst, regenerated BCC catalyst, and mixtures thereof.

## Claims

1. A reactive distillation process for the selective de-oxygenation of a biomass, said process comprising the steps of:
a) providing a slurry comprising the biomass and water;
b) contacting the biomass with a particulate inorganic material;
c) heating the slurry to its boiling point.

2. The process of claim 1 wherein the biomass is a bio-oil.

3. The process of claim 1 wherein the biomass is a ligno-cellulosic biomass.

4. The process of claim 3 wherein step b) comprises exerting mechanical action on the biomass in the presence of the particulate inorganic material.

5. The process of claim 3 or 4 wherein the mechanical action comprises kneading, milling, crushing, extruding, or a combination thereof.

6. The process of any one of the preceding claims wherein the inorganic particulate material has catalytic properties.

7. The process of any one of the preceding claims wherein the inorganic particulate material is an alkaline material comprising Al, Mg, Ca, or a combination thereof.

8. The process of any one of the preceding claims wherein the slurry of step c) further comprises a soluble alkaline material.

9. The process of claim 6 wherein the soluble alkaline material comprises K or Na.

10. The process of claim 7 wherein the soluble alkaline material is NaOH or Na₂CO₃.

11. The process of any one of the preceding claims wherein the boiling temperature is less than 250 °C, preferably less than 200 °C.

12. The process of any one of the preceding claims wherein the slurry of step a) comprises sea water.

13. The process of any one of the preceding claims wherein water vapor formed in step c) is collected and condensed to fresh water.

14. The process of any one of the preceding claims wherein step c) produces a water vapor stream, CO₂, a light gas stream, a gaseous bio-oil stream, a liquid bio-oil stream, and a tar-like slurry.

15. The process of claim 14 comprising the additional step of:
d) adding steam to the process of step c) to strip CO₂.

16. The process of claim 15 wherein overheated steam is used in step d) for also heating the slurry.

17. The process of any one of the preceding claims wherein CO is added to step c) for de-oxygenation of the biomass.

18. The process of any one of claims 14 - 17 wherein the tar-like slurry is burned to form heat and ash.

19. The process of claim 18 wherein at least part of the heat is used in the reactive distillation process.

20. The process of claim 18 or 19 wherein at least part of the ash is added to the slurry of step c).

21. The process of any one of the preceding claims wherein step c) is carried out in a distillation column.

22. The process of claim 21 wherein the distillation column contains catalytic packing material.

23. The process of any one of the preceding claims wherein step c) is carried out at sub-atmospheric pressure.

24. The process of claim 13 wherein the fresh water is purified and used for irrigation, human consumption, or a combination thereof.

25. The process of claim 13 wherein the fresh water is purified and used in growing aquatic biomass.

26. The process of claim 13 wherein heat dissipated by the condensing water is used to pre-heat the slurry of step c).

27. The process of any one of the preceding claims which is integrated with an FCC or BCC process.

28. The process of any one of the preceding claims wherein the particulate inorganic material is selected from the group consisting of spent FCC catalyst; regenerated FCC catalyst; spent BCC catalyst; regenerated BCC catalyst; and mixtures thereof.
